# FASCICULE DE BREVET EUROPEEN

(11) **EP 1 642 048 B1**
(45) Date de publication et mention de la délivrance du brevet: **30.05.2007**
(21) Numéro de dépôt: 04767578.0
(22) Date de dépôt: 05.07.2004
(51) Int. Cl.: F16H 59/04, B60K 20/08

(54) **DISPOSITIF DE COMMANDE EXTERNE DE BOITE DE VITESSES POUR PLANCHE DE BORD**
EXTERNE GETRIEBESTEUERVORRICHTUNG FÜR EIN ARMATURENBRETT
EXTERNAL GEARBOX CONTROL DEVICE FOR A DASH BOARD

(30) Priorité: 04.07.2003 FR 0308162
(43) Date de publication de la demande: 05.04.2006
(73) Titulaire: Renault s.a.s., 92100 Boulogne Billancourt (FR)
(72) Inventeur: PAVEC, Elisabeth, 92000 Nanterre (FR); TEIXEIRA, Jean-Michel, 92500 Rueil-Malmaison (FR)
(74) Mandataire: Rougemont, Bernard
(86) Numéro de dépôt international: PCT/FR2004/001742
(87) Numéro de publication internationale: WO 2005/005867

(56) Documents cités:
- EP-A- 0 743 475
- FR-A- 2 849 809

## Description

L'invention concerne un dispositif de commande d'une boîte de vitesses de véhicule automobile, notamment pour commande de vitesses par câbles, avec un levier de changement de vitesses à la planche de bord.

Plus particulièrement, elle concerne un dispositif de commande externe de boîte de vitesses comportant un levier de changement de vitesses pivotant autour d'un premier axe sur un support pivotant lui même autour d'un second axe sur un bâti porté par le véhicule.

La publication FR-A-2.689.460 décrit un dispositif du type indiqué ci-dessus, pour une commande de vitesses par câble implantée sur une console centrale située plus bas que la planche de bord. Dans cette commande, les axes d'articulation du levier sur le support et de pivotement du support sur le bâti sont concourants, et le levier est perpendiculaire à ces deux axes.

Cette disposition suppose qu'on dispose de suffisamment d'espace disponible dans la console, pour pouvoir y implanter le dispositif de commande en dessous du levier, à la verticale de celui-ci.

Par ailleurs, elle ne permet pas de décaler le levier vers l'arrière par rapport au dispositif de commande et de le remonter au niveau de la planche de bord. En effet, le plan dans lequel se déplace l'extrémité supérieure du levier (parallèle au plan des axes d'articulation et de pivotement) est incliné, si bien que, pour engager un rapport, le levier doit être principalement déplacé vers le haut ou vers le bas. Si on cherche, comme indiqué ci-dessus, à placer le levier au niveau de la planche de bord, le type de dispositif proposé dans la publication PR-A-2.689.460 ne convient pas, car il ne permet pas de privilégier un déplacement horizontal du levier. De plus, l'inclinaison du levier vers l'arrière « **casse »** le poignet du conducteur. La publication EP-A-0 743 475 décrit un dispositif comprenant toutes les caractéristiques du préambule de la revendication indépendante 1.

La présente invention vise à réaliser un dispositif de commande de vitesses par câble pour levier placé de préférence au niveau de la planche de bord.

Dans ce but, elle propose que le levier et le support soient reliés par deux biellettes coplanaires définissant quatre articulations dont trois sont des pivots à un degré de rotation tandis que la quatrième a plus de degrès de liberté.

Selon un mode de réalisation de l'invention, les biellettes sont situées dans un plan orthogonal au premier axe de rotation et parallèle au second.

De préférence, ces biellettes définissent avec le levier et te support quatre articulations dont trois sont des pivots à un degré de rotation tandis que la quatrième a trois degrés de rotation.

D'autres caractéristiques et avantages de l'invention apparaîtront à la lecture de la description suivante d'un mode de réalisation non limitatif de l'invention, en liaison avec les dessins annexés, sur lesquels :

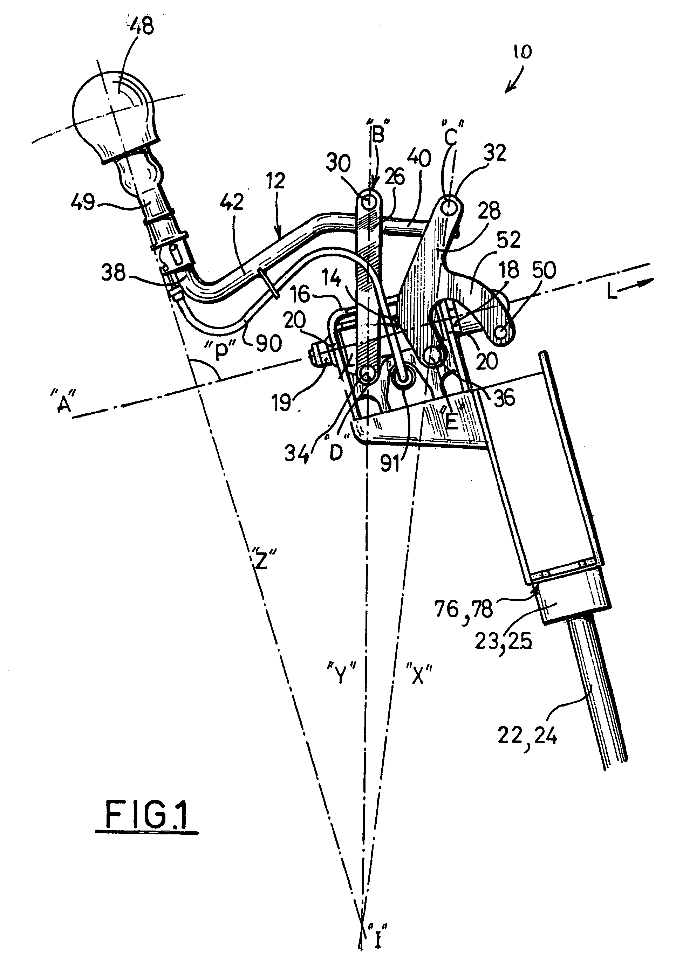

- la figure 1 est une vue de coté du dispositif,
- la figure 2 est une vue en perspective de trois quarts avant du dispositif de la figure 1,
- la figure 3 est une vue en perspective de trois quarts arrière du dispositif de la figure 1, et

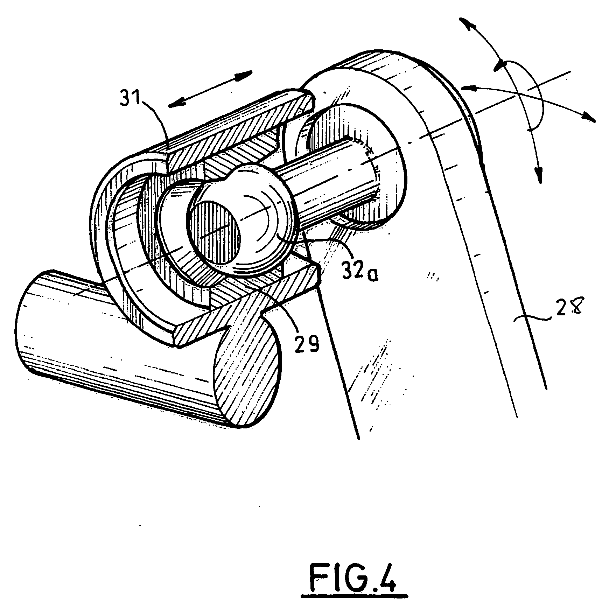

- la figure 4 est une vue de détail du dispositif.

Le dispositif de commande de vitesses 10 illustré par les figures comporte un levier 12 de changement de vitesses pivotant autour d'un premier axe "I", sensiblement transversal par rapport à une direction "L" longitudinale du véhicule. Le premier axe "I" correspond à un axe théorique, instantané de rotation autour duquel s'effectue le mouvement de pivotement du levier 12 autour de la direction transversale.

Le levier 12 est monté sur un support 14 sensiblement horizontal qui est monté lui-même pivotant autour d'un second axe "A" par rapport à un bâti 16 porté par le véhicule. Le second axe "A" est orthogonal au premier axe "I". Le support 14 est par exemple constitué d'un tube traversé par une vis 18 tenue par un écrou 19 reçue dans deux paliers 20 lisses du bâti 16.

Le levier 12 est relié à deux organes 22 et 24 de transmission des mouvements du levier en direction de la boîte de vitesses. Le levier 12 et le support 14 sont reliés par deux biellettes 26, 28 coplanaires. Les biettettes 26, 28 sont situées dans un plan orthogonal au premier axe de rotation I et parallèle au second A. Elles sont articulées sur le levier 12 et sur le support 14 par quatre articulations parallèles 30, 32, 34, 36 définissant un quadrilatère déformable.

De préférence, trois des quatre articulations 30, 32, 34, 36 sont des pivots à un degré de rotation, tandis que la quatrième dispose de degrés de liberté supplémentaires. Elles sont articulées sur le levier 12 et le support 14 par un pivot supérieur 30, par une liaison, annulaire supérieure 32 dite « linéique annulaire» combinant trois degrés de liberté en rotation et un degré de liberté en translation, et par deux pivots inférieurs 34, 36 d'axes respectifs "B", "C", "D", "E", parallèles et qui sont orthogonaux ou second axe "A". Toutefois, dans sortir du cadre de l'invention, la « liaison linéique annulaire» peut être permutée avec les autres articulations.

La liaison «linéique annulaires comporte une rotule 32a fixée à l'extrémité supérieure de la biellette 28. La rotule 32a est enveloppée d'un support 29 sphérique intérieurement et cylindrique à l'extérieur. Enfin, le support 29 est logé dans un manchon cylindrique 31 fixé près de l'extrémité avant du levier 12. Les degrés de liberté de cette liaison sont alors les trois rotations définies par la sphère et une translation définie par la direction du cylindre.

Le levier 12, le support 14 et les biellettes 26, 28 forment un quadrilatère déformable dans lequel les directions des axes X et Y passant par les pivots d'extrémité opposés 30, 34 et 32, 36 de chaque biellette sont concourantes pour déterminer le premier axe "I" de pivotement du levier 12 sur le support 14. Le centre instantané de rotation "I" est situé très en dessous et en avant du pommeau ce qui permet d'obtenir une trajectoire pratiquement circulaire d'une extrémité du levier 12 formant, pommeau, selon une démultiplication pratiquement constante. Le support 14 est sensiblement horizontal. Il pivote autour du second axe "A" de pivotement. Par rapport au support 14, les biellettes 26, 28 sont disposées du même coté du second axe "A", Si on place les pivots 34 et 36 sous l'axe "A" et le pivot 30 et la liaison linéique annulaire 32 au-dessus de la partie 40 d'extrémité avant rectiligne du levier 12, elles peuvent avoir un encombrement vertical particulièrement réduit, et être pratiquement contenues dans un plan "P" longitudinal passant par le second axe "A" d'articulation du levier. 12.

De préférence, les deux biellettes arrière 26 et avant 28 s'étendent sensiblement en avant de l'extrémité arrière du support 14, de sorte que le dispositif présente un encombrement longitudinal presque inexistant entre le support 14 et l'extrémité libre 38 du levier 12. Ceci permet d'intégrer un tel dispositif 10 dans une planche de bord (non représentée) avec un encombrement vertical et longitudinal réduit. Il est ainsi possible de libérer suffisamment d'espace dans la planche de bord pour y intégrer des accessoires de confort et/ou de conduite du véhicule.

Le levier 12 comporte une partie 40 d'extrémité avant rectiligne sur laquelle sont articulées les biellettes avant et arrière, une partie 38 arrière de manoeuvre également rectiligne et une partie 42 intermédiaire coudée pour permettre le déport vertical, de la partie arrière 38 par rapport à la partie 40 d'extrémité avant.

La partie arrière 38 rectiligne, selon une direction "Z" concourante ou non au premier axe "I" avec les directions "X" et "Y" est suffisamment longue pour recevoir une gâchette 49 d'interdiction de sélection de la ligne d'engagement de la marche arrière et un pommeau 48 à trajectoire "ENG" de rotation autour du premier axe "I" et "Sel" autour du second axe "A".

La trajectoire "SEL" de rotation du pommeau 48 autour du second axe "A" correspond à une trajectoire de sélection d'au moins un rapport de la boîte de vitesses et la trajectoire "ENG" de rotation du pommeau 48 autour du premier axe "I" correspond à une trajectoire d'engagement dudit rapport de la boîte de vitesses.

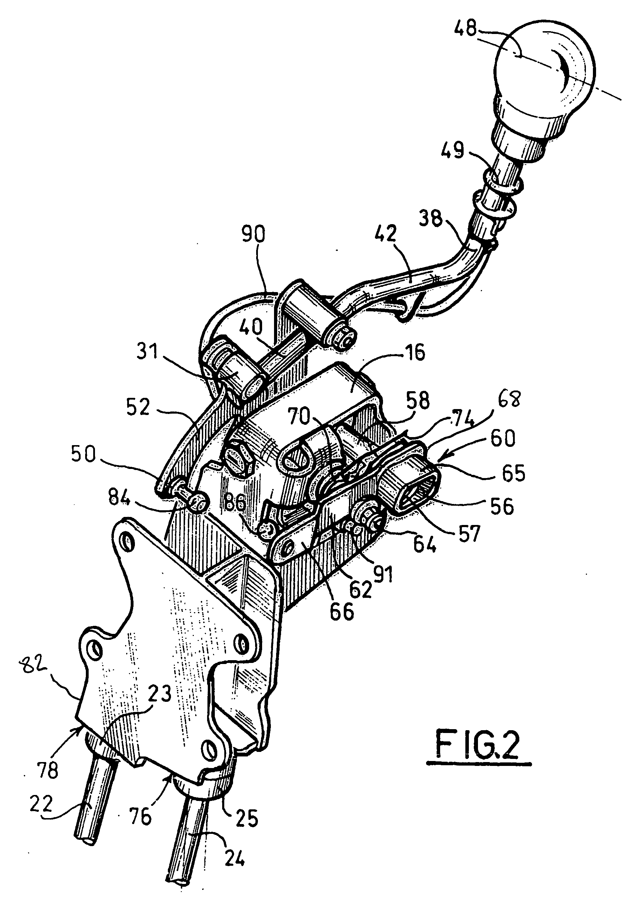

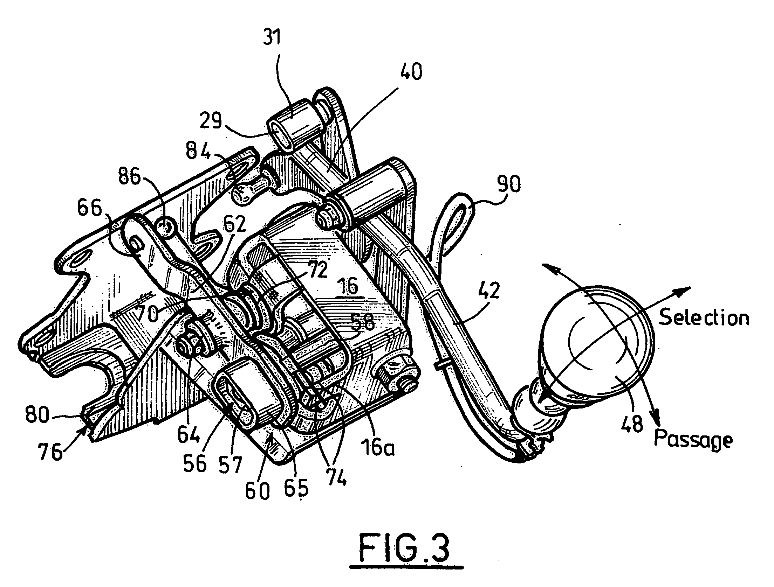

A cet effet, le premier organe 22 de transmission est lié à l'extrémité 50 d'une barre 52 qui s'étend de la partie sensiblement centrale et vers l'avant de la biellette avant 28. Comme indiqué sur les figures 2 et 3, le second organe 24 de transmission, est entraîné par l'intermédiaire d'un doigt 58 qui s'étend à partir du support 14 perpendiculairement au plan "P" des biellettes 26, 28.

Le second organe 24 de transmission est entraîné indirectement par l'extrémité 56 du doigt 58 par l'intermédiaire d'un mécanisme 60 de renvoi qui comporte un levier 62 de renvoi articulé dans une partie intermédiaire autour d'un pivot 64 d'axe transversal lié au bâti 16, dont une extrémité 66 est lié au second organe 24 et dont l'autre extrémité 68 est lié au doigt 58 par une autre liaison de type « linéique annulaire ».

Cette seconde « liaison linéique annulaire » comporte une rotule (non visible sur les figures) à l'extrémité du doigt, 58 enveloppée d'un support plastique 57 sphérique intérieurement et à plans parallèles à l'extérieur logée dans un évidement 65 sensiblement rectangulaire. Le support 57 est fixé à l'extrémité du levier 62 opposée à l'extrémité 66, de manière à donner une liberté totale de mouvement au doigt 58 par rapport au levier-62.

Le levier 62 de renvoi est rappelé élastiquement vers une position angulaire intermédiaire, représentée aux figures 2 et 3, correspondant au milieu de la course de rotation du support 14, entre une position correspondant à la sélection du rapport de cinquième et une position correspondant à la sélection du rapport de première, dans laquelle le doigt 58 est horizontal et dans laquelle les biellettes avant 28 et arrière 26 sont comprises dans un plan "P" vertical.

Le levier 62 de renvoi est rappelé élastiquement par un ressort filaire 70 dont une spire 72 est enroulé sur le pivot 64 du levier 62 de renvoi, et dont deux brins parallèles, 74, maintenus. à leur extrémité par un bras 16a de direction transversale aux brins 74, solidaire du bâti 16, prennent appui de part et d'autre du doigt 58. L'un ou l'autre des brins 74 rappellent le doigt 58 dans sa position horizontale lorsqu'il est sollicité par ledit doigt 58. Cette configuration permet de réaliser d'une manière très simple un rappel efficace du levier, 62 autour d'une position neutre.

Les premier et second organes 22, 24 de transmission sont de préférence des câbles rigides gainés. Les arrêts des gaines 23 et 25 respectifs des câbles 22, 24 sont destinés à prendre appui contre une face inférieure 76, 78 associées d'un cavalier 80, 82, intégrés au bâti. Chaque câble 22, 24 comporte à son extrémité une tête femelle (non représentée) destinée à coopérer avec une rotule mâle 84, 86 de l'extrémité 50 de la barre 52 et.de l'extrémité 66 du renvoi 60.

Dans cette configuration, le premier câble 22 commande l'engagement des rapports de vitesses de la boîte et le second câble 24 commande la sélection.

Le pommeau de commande 48 est par exemple pourvu d'une gâchette 49 d'interdiction de sélection de la ligne d'engagement de la marche, arrière. Lors d'un déplacement de ladite gâchette dans la direction de l'axe de l'extrémité 38 du levier 12, elle agit sur un organe 90 de transmission, notamment un câble, d'entraînement d'un verrou 91 de marche arrière fixé sur le bâti parallèlement à l'axe support 64 du levier de sélection 62.

En position de repos, le verrou 91 de marche arrière interdit au levier 62 de renvoi de sélection une rotation supérieure à la sélection de la ligne d'engagement des rapports de première ou de deuxième ou la ligne d'engagement des rapports de cinquième et de sixième symétrique par rapport à la ligne intermédiaire de sélection des rapports de troisième et de quatrième dans laquelle le levier de renvoi 62 est dans une position sensiblement horizontale. Par traction volontaire de la gâchette 49 vers le pommeau 48, le verrou 91 de marche arrière se rétracte et autorise au levier 62 de renvoi de sélection une rotation correspondant à la sélection de la ligne d'engagement de la marche arrière. Un ressort de rappel intégré au verrou 91 ou/et à la gâchette 49 remet le verrou 91 en position d' interdiction quand le conducteur relâche ladite gâchette.

En variante, on peut prévoir un bouton de commande d'un contacteur électrique intégré au pommeau pour la commande d'un actionneur électrique, par exemple un électro-aimant, du verrou 91 d'interdiction de sélection de la ligne d'engagement de la marche arrière.

En conclusion, il faut souligner que l'invention permet d'avoir sur le pommeau du levier de changement de vitesses, des trajectoires de sélection et d'engagement d'un bon niveau ergonomique. De plus, la course d'engagement du pommeau est sensiblement plane, et dans le prolongement de l'avant bras du conducteur, avec une démultiplication pratiquement constante.

## Revendications

1. Dispositif de commande externe de boîte de vitesses comportant un levier (12) de changement de vitesses pivotant autour d'un premier axe (I) sur un support (14) pivotant lui-même autour d'un second axe (A) sur un bâti (16) porté par le véhicule, le levier et le support étant reliés par deux biellettes coplanaires (26, 28) dont les points d'intersection des prolongements respectifs vers le bas du véhicule définissent l'axe de rotation (I) du levier sur le support (14), et qui sont articulées sur le levier (12) et sur le support (14) par quatre articulations parallèles (30, 32, 34, 36) définissant un quadrilatère déformable, **caractérisé en ce que** trois des quatre articulations (30, 34, 36) sont des pivots à un degré de rotation tandis que la quatrième (32) a plus de degrés de liberté.

2. Dispositif de commande selon la revendication 1, **caractérisé en ce que** les biellettes (26, 28) sont situées dans un plan orthogonal au premier axe de rotation (I) et parallèle au second (A).

3. Dispositif de commande selon la revendication 1 ou 2, **caractérisé en ce que** la quatrième articulation (32) est associée à la biellette avant (28) vis-à-vis de la direction longitudinale du véhicule (L).

4. Dispositif de commande selon la revendication 1, 2 ou 3, **caractérisé en ce que** la quatrième articulation est l'articulation supérieure (32) de la biellette avant (28).

5. Dispositif de commande selon l'une des revendications précédentes, **caractérisé en ce que** la quatrième articulation (32) a trois degrés de liberté en rotation et un degré de liberté en translation.

6. Dispositif de commande selon l'une des revendications précédentes, **caractérisé en ce que** la quatrième articulation (32) comporte une rotule (32a) fixée à l'extrémité supérieure de la biellette (28).

7. Dispositif de commande selon la revendication 6, **caractérisé en ce que** la rotule (32a) est enveloppée d'un support (29) sphérique intérieurement et cylindrique à l'extérieur.

8. Dispositif de commande selon la revendication 7, **caractérisé en ce que** le support (29) est logé dans un manchon cylindrique (31) fixé près de l'extrémité avant du levier (12).

## Claims

1. External gearbox control device comprising a gear lever (12) pivoting about a first axis (I) on a mount (14) itself pivoting about a second axis (A) on a supporting structure (16) borne by the vehicle, the lever and the mount being connected by two coplanar link rods (26, 28) of which the points of intersection of the respective continuations towards the bottom of the vehicle define the axis (I) about which the lever rotates on the mount (14) and which are articulated to the lever (12) and to the mount (14) by four parallel joints (30, 32, 34, 36) defining a deformable quadrilateral, **characterized in that** three of the four joints (30, 34, 36) are pivots with one degree of rotation while the fourth (32) has more degrees of freedom.

2. Control device according to Claim 1, **characterized in that** the link rods (26, 28) lie in a plane orthogonal to the first axis of rotation (I) and parallel to the second (A).

3. Control device according to Claim 1 or 2, **characterized in that** the fourth joint (32) is associated with the front link rod (28) with respect to the longitudinal direction of the vehicle (L).

4. Control device according to Claim 1, 2 or 3, **characterized in that** the fourth joint is the upper joint (32) of the front link rod (28).

5. Control device according to one of the preceding claims, **characterized in that** the fourth joint (32) has three degrees of freedom in rotation and one degree of freedom in translation.

6. Control device according to one of the preceding claims, **characterized in that** the fourth joint (32) comprises a ball (32a) fixed at the upper end of the link rod (28) .

7. Control device according to Claim 6, **characterized in that** the ball (32a) is enveloped by a mount (29) that is spherical on the inside and cylindrical on the outside.

8. Control device according to Claim 7, **characterized in that** the mount (29) is housed in a cylindrical sleeve (31) fixed near the front end of the lever (12).

## Patentansprüche

1. Externe Schaltgetriebe-Steuervorrichtung mit einem Gangschaltungshebel (12), der um eine erste Achse (I) auf einem Träger (14) schwenkt, der selbst um eine zweite Achse (A) auf einem Rahmen (16) schwenkt, der vom Fahrzeug getragen wird, wobei der Hebel und der Träger von zwei koplanaren Schaltgestängen (26, 28) verbunden werden, deren Schnittpunkte der jeweiligen Verlängerungen zur Unterseite des Fahrzeugs hin die Drehachse (I) des Hebels am Träger (14) definieren, und die an den Hebel (12) und den Träger (14) über vier parallele Gelenke (30, 32, 34, 36) angelenkt sind, die ein verformbares Viereck definieren, **dadurch gekennzeichnet, dass** drei der vier Gelenke (30, 34, 36) Drehgelenke mit einem Drehgrad sind, während das vierte (32) mehr Freiheitsgrade hat.

2. Steuervorrichtung nach Anspruch 1, **dadurch gekennzeichnet, dass** die Schaltgestänge (26, 28) sich in einer Ebene orthogonal zur ersten Drehachse (I) und parallel zur zweiten (A) befinden.

3. Steuervorrichtung nach Anspruch 1 oder 2, **dadurch gekennzeichnet, dass** das vierte Gelenk (32) dem vorderen Schaltgestänge (28) gegenüber der Längsrichtung des Fahrzeugs (L) zugeordnet ist.

4. Steuervorrichtung nach Anspruch 1, 2 oder 3, **dadurch gekennzeichnet, dass** das vierte Gelenk das obere Gelenk (32) des vorderen Schaltgestänges (28) ist.

5. Steuervorrichtung nach einem der vorhergehenden Ansprüche, **dadurch gekennzeichnet, dass** das vierte Gelenk (32) drei Drehfreiheitsgrade und einen Translationsfreiheitsgrad hat.

6. Steuervorrichtung nach einem der vorhergehenden Ansprüche, **dadurch gekennzeichnet, dass** das vierte Gelenk (32) ein Kugelgelenk (32a) aufweist, das am oberen Ende des Schaltgestänges (28) befestigt ist.

7. Steuervorrichtung nach Anspruch 6, **dadurch gekennzeichnet, dass** das Kugelgelenk (32a) von einem innen kugelförmigen und außen zylindrischen Träger (29) umhüllt wird.

8. Steuervorrichtung nach Anspruch 7, **dadurch gekennzeichnet, dass** der Träger (29) in einer zylindrischen Muffe (31) angeordnet ist, die nahe dem vorderen Ende des Hebels (12) befestigt ist.
